# EUROPEAN PATENT APPLICATION

(11) **EP 3 313 110 A1**
(43) Date of publication of application: **25.04.2018**
(21) Application number: 16194738.7
(22) Date of filing: 20.10.2016
(51) Int. Cl.: H04W 12/06, H04M 1/725, H04W 8/24

(54) **A METHOD AND AN APPLICATION FOR MANAGING FUNCTIONALITIES OF A MOBILE DEVICE**

(71) Applicant: Nagravision S.A., 1033 Cheseaux-sur-Lausanne (CH)
(72) Inventor: LE PELERIN, Alain, 1020 Renens (CH)
(74) Representative: Leman Consulting S.A.

(57) **Abstract**

A method to remotely manage by a provider system at least one functionality associated with a mobile device, comprising an initialization phase where a reference authentication value is produced and stored in the mobile device and the provider system. In an operating phase, a communication between the provider system and the mobile device is established via a communication link. The mobile device receives from the provider system, a provider authentication value and a message comprising a descriptor of the at least one functionality to disable. The mobile device verifies the provider authentication value by using the reference authentication value stored in the mobile device during the initialization phase, and upon successful verification, the at least one functionality of the mobile device is disabled.

## Description

The present disclosure generally relates to a method and an application for managing functionalities of a mobile device. In particular, at least one functionality of a mobile device may be remotely modified under predetermined conditions by a provider system.

### Technical background

In general a mobile consumer electronic device has an operating system and a number of applications able to run on the device. The mobile device also has functionalities which may be provided in form of specific applications or applications may have particular functionalities. The mobile device may be configured with resources comprising a standard set of applications and functionalities, as for example the mobile device may comprise a telephone application, a GPS (Global Positioning System) receiver functionality, a messaging application, an email client application, a web browser application, a camera application, and so on.

The use of mobile devices which are generally portable, such as smartphones, tablets, portable personal computers and the like may be not authorized or tolerated in certain environments. For example, in airplanes, the use of electronic equipment such as mobile devices is discouraged. Public areas, restaurants or hotels, for example, sometimes use phone jammers to disable mobile network access and therefore forbid the use of telephone and web browser applications on smartphones. These solutions for preventing use of smartphones or other portable devices are heavy-handed and lack refinement.

There is thus a need for a selective managing mechanism of device functionalities taking a granular approach rather than a heavy-handed, all-or-nothing approach.

### Brief description of the drawings

Figure 1 shows a flowchart representing steps of the disclosed method performed by a provider system transmitting in an operating phase a provider authentication value and a descriptor for disabling at least one functionality of a mobile device.
Figure 2 shows a flowchart representing steps of the disclosed method performed by a mobile device transmitting an enabling request to the provider system for enabling the at least one functionality previously disabled according to the method represented by the flowchart of figure 1.
Figure 3 shows a flowchart representing steps of an embodiment of the disclosed method where the provider authentication value is specific to a given mobile device.
In an operating phase, the mobile device transmits its identifier to the provider system that retrieves a provider authentication value in a database by using the identifier of the mobile device.
Figure 4 shows a flowchart representing steps of the disclosed method performed by a mobile device transmitting an enabling request to the provider system with its identifier for enabling the at least one functionality previously disabled according to the embodiment represented by the flowchart of figure 3.

### Detailed description

The present disclosure relates to a method for remotely managing by a provider system at least one functionality associated with at least one application on a mobile device, the provider system and the mobile device being configured to communicate with each other via a communication link. The disclosed method carries out steps according to claim 1.

The provider system may comprise one or more servers associated with peripherals managed by a provider of various services and/or activities. The provider may be defined herein as an organization or an institution as for example a shopping center, a railway station, an airport, a leisure center, a museum, a music or film festival, or any other public or private activity organization.

The provider system may be configured to communicate via a bidirectional local wireless link with mobile devices by using peripherals as for example access terminals, electronic gates or hotspots. At least one functionality of the mobile device may be remotely disabled by the provider system by using the bidirectional local wireless link for transmitting appropriate data. This bidirectional local wireless link may include communication technology using for example NFC (Near Field Communication), Bluetooth, Wi-Fi (Wireless Fidelity), Li-Fi (Light Fidelity) using optical wireless communication technology or other local wireless communication technology.

The communication may be set up in a local mode between the devices without transiting through a server on a public mobile network using for example 3G, 4G, LTE (Long Term Evolution) or other type of mobile communications technology requiring a mobile communication service provider.

The local communication allows establishing a direct communication between devices by using communication modules adapted to the used wireless communication technology.

Several local connection modes may be applied for establishing a direct communication between the mobile device and the provider system:
For example the communication may be established via a NFC link by approaching the mobile device to a terminal of the provider system, both devices being provided with activated NFC communication capabilities.

According to a further example, mobile devices provided with NFC and Bluetooth communication capabilities may connect according to a so called one touch connection mode by using an appropriate connection application, e.g. "NFC Easy Connect" application. In a first phase, the mobile device touches an appropriate surface on the provider terminal a short time in order to initiate a communication via the NFC link. The mobile device previously activated for NFC communication and the provider terminal may exchange their identifiers so that the mobile device records the identifier of the provider terminal and vice-versa. In addition, at least one cryptographic key may also be shared by the connection application. In a second phase, a command may be transmitted by the provider terminal to the mobile device, or inversely, via the NFC link, for activating a Bluetooth communication link between the devices. This Bluetooth link enables an automatic pairing of the devices which have already exchanged their identifiers and the cryptographic key via the NFC link during the first phase. The cryptographic key may be used as pairing key for encrypting the data exchanged via the Bluetooth link.

The Bluetooth link may be disabled by touching again the device for enabling the NFC link allowing the mobile device to transmit a Bluetooth pairing deactivating command to the provider terminal.

As in the preceding example, device provided with NFC and Wi-Fi communication capabilities may also connect in a so called one touch connection mode where a Wi-Fi connection may be activated via the NFC link in the first phase instead of the Bluetooth link. In the second phase, a command may be transmitted by the provider terminal to the mobile device, or inversely, via the NFC link, for activating a Wi-Fi communication link between the devices via a local Wi-Fi router. This Wi-Fi link enables an automatic pairing of the devices which have already exchanged their identifiers and the cryptographic key via the NFC link during the first phase. The cryptographic key may be used as pairing key for encrypting the data exchanged via the Wi-Fi link.

According to a further example, the local communication may be established by a connection to a hotspot. A hotspot is a physical location that may offer Internet access over a Wireless Local Area Network (WLAN) through the use of a router connected to a link to an Internet service provider. Hotspots typically using Wi-Fi technology may be found in coffee shops and various other public establishments in many developed urban areas throughout the world. In case a communication is established with a hotspot, the hotspot plays a role of provider terminal which is able to remotely disabling applications or functionalities or enabling the previously disabled applications or functionalities on the mobile device.

A mobile device may be in form of a smartphone, a tablet, a portable personal computer, a personal digital assistant or any other portable device able to communicate wirelessly with resources on a public mobile communication network. The public mobile communication network may be of type 3G, 4G, LTE (Long Term Evolution) or other type of high speed mobile communications technology. The mobile device may also be able to communicate on the bidirectional local wireless link.

The mobile device may include central processor unit(s), system memory, system interface, storage device(s), user interface(s), and network interface. The system memory includes operating system, and applications. For example, the mobile device may include a combination of ASICs and basis circuitry to implement functionalities described herein. Further, in some examples, mobile device may not include a dedicated central processing unit and an operating system. Functions of mobile device may be realized using any combination of hardware, firmware and/or software implementations. Storage device(s) represent memory of mobile device that may be configured to store larger amounts of data than system memory. Storage device(s) may be internal or external memory and in some examples may include non-volatile storage elements. For example, storage device(s) may include memory cards (e.g., a Secure Digital (SD) memory card), and/or an internal solid state drive. User interface(s) may include devices configured to receive input from a user. For example, user interface(s) may include buttons and switches, movement sensors, touch-sensitive sensors, a track pad, a mouse, a keyboard, a microphone, a video camera, or any other type of device configured to receive user input. In one example, user interface(s) may include a touch screen display configured to display one or more of the graphical user interfaces. Network interface may be configured to enable mobile device to communicate with external computing devices, such as servers. Further, in the example where mobile device includes a smartphone, or the like, network interface may be configured to enable mobile device to communicate with a cellular network. Network interface may include a network interface card, such as an Ethernet card, an optical transceiver, a radio frequency transceiver, or any other type of device that can send and receive information. Network interface may be configured to operate according to one or more communication protocols such as, for example, a Global System Mobile Communications (GSM) standard, a code division multiple access (CDMA) standard, a 3rd Generation Partnership Project (3GPP) standard, an Internet Protocol (IP) standard, a Wireless Application Protocol (WAP) standard, Bluetooth, ZigBee, and/or an IEEE standard, such as, one or more of the 802.11 standards, as well as various combinations thereof. The system memory includes operating system, which may be configured to facilitate the interaction of applications and with central processing unit(s), and other hardware components of mobile device. Operating system may include any version of any of the example operating systems designed to be installed on laptops, desktops, smartphones, tablets, set-top boxes, digital video recorders, televisions and/or gaming devices. In one example, operating system may include one or more of operating systems or middleware components developed by, Windows®, operating systems, Linux operation systems, Mac OS®, Android® operating systems, and any and all combinations thereof. It should be noted that the techniques described herein are not limited to a particular operating system. Applications may be any applications implemented within or executed by mobile device and may be implemented or contained within, operable by, executed by, and/or be operatively / communicatively coupled to components of mobile device. Applications may include instructions that may cause central processing unit(s) of mobile device to perform particular functions.

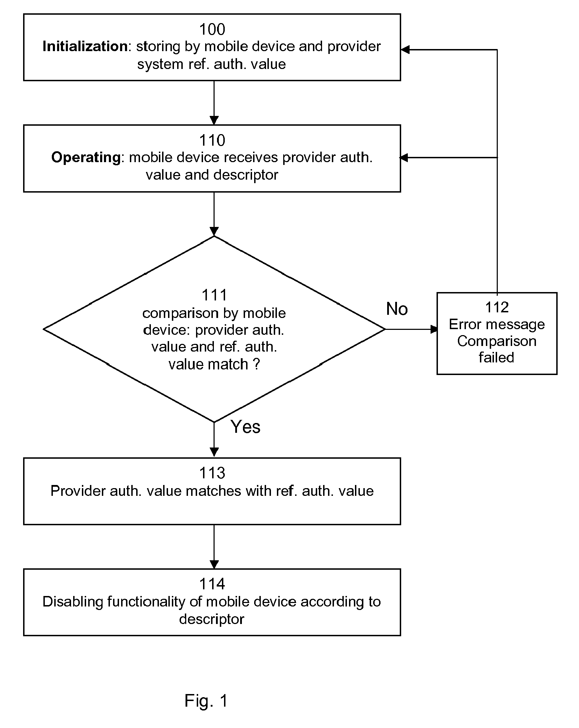

According to an embodiment, an initialization phase may be performed by the mobile device by using a particular application associated with the provider system. For example a user of the mobile device launches the application to establish a communication with the provider system via the public cellular network. A user interface related to the application allows browsing through different services made available by the provider. In order to receive a service or benefit from some privileges of the provider, the user may register at the provider system. In reply of the registration, the provider system may transmit a reference authentication value to the mobile device. The reference authentication value may be stored in a memory of the mobile device managed by the application. Preferably, the storage of the reference authentication value is subject to an approval by the user of the mobile device. The provider system stores also this reference authentication value for later use in an operating phase described hereafter, see figure 1, step 100.

According to an embodiment, the reference authentication value may be a constant value such as a provider identifier, a name of a service, an encryption key or a certificate. The certificate may be in form of a file containing an identifier associated with the provider, an encryption key and other data used in an authentication process. The encryption key may include for example a public key of a RSA (Rivest, Shamir, Adleman) asymmetric keys encryption scheme.

According to a further embodiment the mobile device may receive a message comprising a descriptor including an identifier of at least one functionality to disable. The descriptor may preferably include a disable command associated with an identifier of the functionality recognizable by the operating system of the mobile device. The disable command may be associated with several functionality identifiers when more than one functionality has to be disabled at a same time. According to one embodiment, the descriptor is sent at the initialization phase while the reference authentication value is sent to the mobile device. The descriptor is then stored in the mobile device for further use.

According to another embodiment, the descriptor is sent at the operating phase.

According to a further embodiment, the mobile device may receive in addition to the reference authentication, an identifier of the provider system. This identifier may also be received when the mobile device receives the message comprising the descriptor.

In an operating phase, step 110 of figure 1, the mobile device communicates with the provider system via the bidirectional local wireless link as for example the mobile device communicates via a NFC link with an access terminal.

The mobile device receives from the provider system, e.g. the access terminal, at least a provider authentication value. The mobile device can also receive a message comprising the descriptor of at least one functionality to disable if said message has not been already received at the initialization phase.

The mobile device may include functionalities or applications, which may be shown as respective icons or menu items on a screen associated with the mobile device. In normal use of the mobile device, for example a smartphone is operated by a user in accordance with applied settings or options. When a user selects a new application for launching, the application runs within the mobile device environment. A user of a smartphone for example can surf on Internet, save phone numbers in a contact list, consult or edit the contact list, perform phone calls, receive incoming calls, download or listen to music, take images or videos with an incorporated camera, view images and videos held in a media rendering application or media gallery application, manipulate data between relevant applications and many other actions depending on available applications or functionalities.

The disclosed method may thus allow the provider system remotely disabling applications or functionalities or enabling the previously disabled applications or functionalities on the mobile device. The applications or functionalities may comprise for example, Internet surfing, receiving calls, downloading music, taking pictures or video sequences with the camera, etc.

An example of a functionality of the mobile device may comprise an application or a functional element of the mobile device to which access is to be controlled. Applications can be telephony in a smartphone, messaging functionality, email, web browser or any other application related to communications via a mobile network. Options or settings on the smartphone can be considered as a user interface features or parameters settings related to operation of applications or the operating system of the smartphone.

Functionalities may further comprise functions within an application which may also be controlled via the disabling or enabling operation. For example, phone calls to certain telephone numbers can be blocked or released since phone calls can be regarded as a function related to the mobile telephony application. In this way not only access to a top level of an application may be controlled but also a certain granularity may be provided allowing control of functionalities managing one or more functions of the application.

Upon reception of the provider authentication value, the mobile device verifies said provider authentication value before the at least one functionality is disabled, step 111 of figure 1. The verification process uses the reference authentication value previously stored in the memory of the mobile device during the initialization phase.

Two cases can be highlighted regarding the reference authentication value and the provider authentication value:
A) The reference authentication value and the provider authentication value are independent of the mobile device.
B) The reference authentication value and the provider authentication value are specific to the mobile device.

### A Reference authentication value and provider authentication value independent of the mobile device

These values do not depend on an identifier of the mobile device so that they are the same for all mobile devices managed by a given provider system.

The provider authentication value can take several forms, namely:
- A constant value such as a provider identifier, a name of a service or any other constant alpha numeric value corresponding to the reference authentication value previously stored in the memory of the mobile device. In this case, the verification includes a comparison of the received provider authentication value with the stored reference authentication value, figure 1, step 111. When the two values are identical the verification is successful, figure 1, step 113 and the at least one functionality of the mobile device is disabled according to the descriptor, figure 1, step 114.
- A constant value resulting from applying a mathematical function on the reference authentication value. The provider system may calculate the provider authentication value by applying the mathematical function on the reference authentication value previously stored by the provider system at initialization phase, the mathematical function being known by the mobile device. According to an embodiment, the provider authentication value may comprise an index allowing determining the mathematical function to be used by the mobile device to calculate the reference authentication value from the received provider authentication value. The verification includes a comparison of the stored reference value with the calculated reference value. When the two values are identical, the verification is successful.
- A cryptogram resulting from an encryption of data with a key, this key being for example a private encryption key of the provider system. The reference authentication value, stored at the initialization phase being the corresponding public encryption key. The mobile device verifies the provider authentication value by decrypting the cryptogram with the public encryption key previously stored at initialization phase. The resulting data are compared with corresponding data available to the mobile device. The data may be the may comprise a time stamp including a current date and time for comparison with the current date and time given by a clock of the mobile device. The comparison takes account of a predetermined time shift between the time stamp of the provider system and the date and time of the mobile device. When the comparison gives a result where the difference between the date and time of the provider system and the date and time of the mobile device is smaller or equal to the predetermined time shift, the verification is considered as successful. The time stamp plays a role of an anti-replay function preventing multiple using of the cryptogram.

According to a further embodiment, the data may comprise the descriptor to be compared with the received descriptor in case where the mobile device has received this descriptor from the provider system at initialization phase. The descriptor itself may be replaced by a check sum or a hash value thereof, which is then calculated by the mobile device over the stored descriptor before comparison with the received check sum or hash value. A hash value may be calculated with a hash algorithm or function that converts input data forming a string into an output data string of fixed length. The output data string forming the hash value is generally much smaller than the input data string. Hash algorithms are designed to be collision resistant, meaning that there is a very low probability that the same string would be created for different data. The most common used hash algorithms are the MD5 (Message-Digest algorithm 5) and the SHA-1 (Secure Hash Algorithm).

According to a further embodiment, the data may comprise an identifier of the provider system to be compared with the received identifier in case where the mobile device has received this identifier from the provider system at initialization phase. As in the preceding embodiment, the identifier itself may be replaced by a check sum or a hash value thereof, which is then calculated by the mobile device over the stored identifier before comparison with the received check sum or hash value.

According to a further embodiment, the mobile device respectively an application thereof may be configured to store several reference authentication values each transmitted by a particular provider system. At operating phase, the mobile device tests the reference authentication value with the received provider authentication value in order to determine which reference authentication value is to be used for processing verification. According to a further embodiment the mobile may receive the reference authentication value with an identifier of the provider system. At operating phase, the mobile device may receive the provider authentication value with the identifier of the provider so that the mobile device can determine the proper reference authentication value corresponding to the identifier of the provider system for verification. The mobile device therefore does not need to perform tests of the reference authentication value as in the preceding embodiment.

In case of an unsuccessful verification of the provider authentication value by the mobile device using the reference authentication value, an error message may be displayed on a screen associated with the mobile device, figure 1, step 112. In addition to the error message, the user of the mobile device may be invited to restart the operating phase in order to receive a new provider authentication value or restart the initialization phase in order to receive a new reference authentication value.

Whatever the embodiments discussed above regarding the features of the authentication values, and when the verification is performed successfully, one or more functionalities of the mobile device are disabled according to the descriptor received by the mobile device.

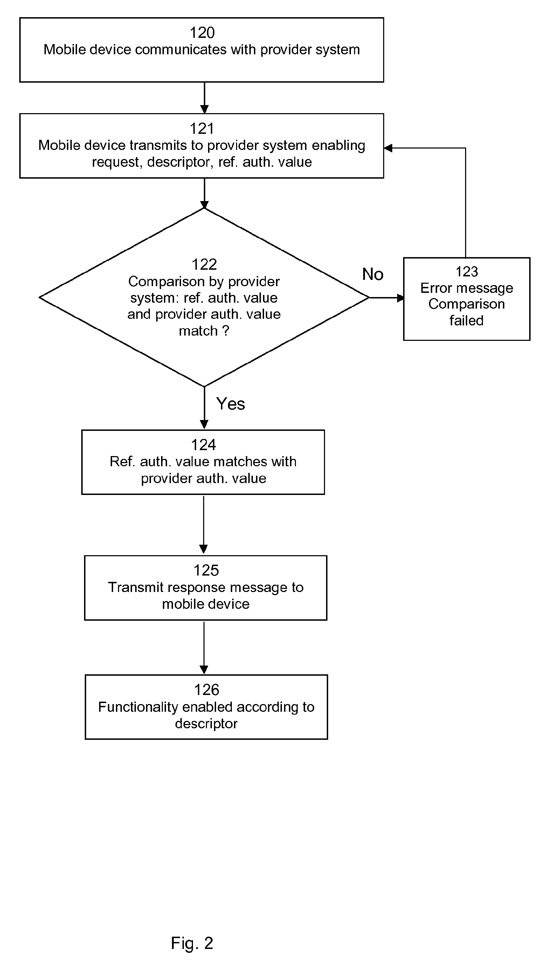

The disabled functionality on the mobile device may be enabled again once a communication is locally established between the provider system and the mobile device, see figure 2, step 120. The mobile device may transmit a request message for enabling the at least one previously disabled functionality on the mobile device to a terminal of the provider system, figure 2, step 121. The request message may comprise the reference authentication value and the descriptor retrieved from the memory of the mobile device. The provider system verifies the received reference authentication value by comparison with the provider authentication value, figure 2, step 122. When the comparison of the authentication values gives a match, figure 2, step 124, the provider system transmits to the mobile device a response message comprising a command for enabling the disabled functionalities according to the descriptor, figure 2, steps 125 and 126.

In a contrary case, if the verification fails by showing a difference between the compared reference authentication value retrieved from the memory of the mobile device and the received provider authentication value, an error may be signaled to the user of the mobile device, see step 123 of figure 2. The error may be signaled, for example, in form of an error message displayed on a screen associated with the mobile device, a sound signal, an optical signal or any other warning indicating that the at least one previously disabled functionality is not enabled. In this case, the functionality enabling process may be restarted by the terminal which transmits to the mobile device a new message comprising the enabling request associated with the identifier of the at least one functionality to enable.

According to an embodiment, the functionalities having been disabled by a terminal of the provider system in a mobile device may be enabled automatically after a predetermined time period. In this case, the descriptor may comprise, in addition to the identifier of the at least one functionality to disable, an additional parameter configured to set a time period after which the at least one disabled functionality may be enabled again. Therefore a further connection of the mobile device to the terminal of the provider system via the local communication link as in the preceding embodiment becomes no more necessary for enabling the at least one disabled functionality by an enabling request message.

For example, in an airport, the functionality related to connection capabilities of a smartphone to a public mobile network may be disabled for a given time by an appropriate terminal. The mobile device may establish a communication, via an NFC link for example, with the terminal. The descriptor comprises in this case a parameter related to the functionality of mobile network connection capability and an additional time parameter adapted to the duration of a flight. When the user of the mobile device leaves the airplane, the mobile network connection functionality will then be automatically enabled after the time set for the flight duration without connecting the mobile device to the terminal.

According to a further embodiment, the mobile device may be provided with GPS (Global Positioning System) features allowing determining position of the mobile device. Instead of an additional parameter related to the time as in the preceding example, the descriptor may comprise an additional parameter including position coordinates corresponding to an area where connection functionality is not advisable. When the mobile device exits this area, the connection functionality can be automatically enabled.

According to a further embodiment, the additional parameter may be related to a predetermined operating condition of the mobile device. When the operating condition changes, the at least one disabled functionality is enabled again. For example, in an exhibition where taking pictures of shown objects is forbidden, a mobile device user has to establish a communication with a Wi-Fi hotspot of the provider system for getting information on the shown objects. When the communication with the Wi-Fi hotspot is established, the mobile device receives a descriptor configured to disable the camera image recording functionality so that taking pictures becomes no more possible. When the mobile device user leaves the exhibition without voluntary stopping the communication with the Wi-Fi hotspot, the camera recording functionality may be automatically enabled again when communication with the Wi-Fi hotspot is stopped. The additional parameter added to the descriptor comprising the camera recording functionality disabling by the Wi-Fi hotspot is thus related to the operating condition, namely: as long as the connection to the Wi-Fi hotspot is active, the camera image recording functionality is disabled. When the operating condition changes: the connection to the Wi-Fi hotspot is deactivated, the disabled camera image recording functionality is enabled again.

In the field of pay-TV, the disclosed method may be applied to parental control by blocking access to content for adults. A multimedia receiver device such as a television set-top-box or a television receiver configured to access multimedia content may comprise local communication capabilities using for example NFC, Bluetooth, Wi-Fi link. The access control may be performed by a smartphone acting as a terminal of the provider system communicating with the multimedia receiver via the local communication link. An appropriate application on the smartphone may be configured to transmit to the multimedia receiver device, in an initialization phase, a reference authentication value and a descriptor of reception channels to which access has to be blocked. The reference authentication value and the descriptor are stored in a memory of the smartphone and of the multimedia receiver.

In the operating phase, the smartphone transmits to the multimedia receiver a provider authentication value. The multimedia receiver verifies conformity of the provider authentication value with the previously stored reference authentication value before disabling access to reception channels according to the descriptor. The multimedia receiver forwards the received descriptor to an electronic program guide (EPG) application managing content reception, which blocks access to the channels indicated by the descriptor. The smartphone may connect to the multimedia receiver in a "one touch connection" mode as described above for establishing the local communication and blocking channels. The fastidious use of a remote control for manually disabling predetermined channels one by one on an electronic program guide displayed on a television screen is thus avoided. The blocked channels may be released in an inverse way than for disabling by an enabling request associated with the descriptor containing the channel numbers or names to enable.

According to an embodiment, the descriptor may also be transmitted by the smartphone at operating phase with the provider authentication value instead at initialization phase.

### B) The reference authentication value and the provider authentication value are specific to the mobile device.

These values are specific to a unique identifier of each mobile device managed by a given provider system.

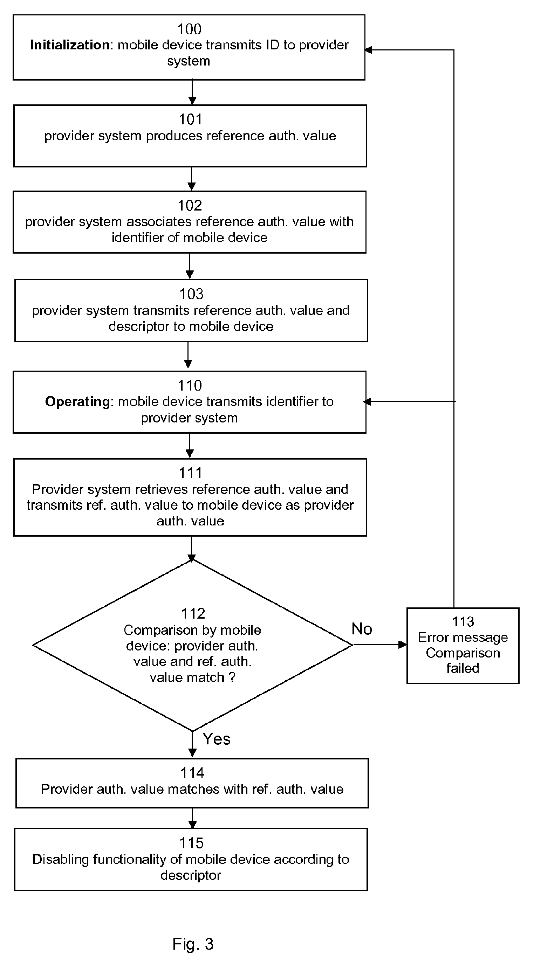

At the initialization phase, figure 3, steps 100 to 103, the mobile device transmits to the provider system an identifier specific to the mobile device, figure 3, step 100. The provider system produces a reference authentication value and associates it with the identifier before storing the identifier and the reference authentication value into a database, figure 3, step 102. The identifier of the mobile device may include a phone number, an IMEI (International Mobile Equipment Identity), a user name, or any other identifier specific to the mobile device.

In one embodiment, the mobile device may be previously registered at the provider system with user particulars so that the user name becomes sufficient to uniquely identify the mobile device. Upon reception of the identifier of the mobile device, the provider system transmits to the mobile device the produced reference authentication value and a message comprising the descriptor of the functionality to disable, figure 3, step 103.

At the operating phase, when the communication with the provider system is established, figure 3, step 110, the mobile device transmits first its identifier to the provider system. The provider system retrieves the reference authentication value from the database by using the received identifier of the mobile device. The retrieved reference authentication value is used to determine the provider authentication value and then transmitted by the provider system as a provider authentication value to the mobile device, figure 3, step 111. The mobile device verifies the received provider authentication value by using the reference authentication value previously stored at initialization phase, figure 3, step 112 according the different possibilities explained above.

According to an embodiment, at initialization phase, instead of the provider system, the mobile device generates a reference authentication value and transmits the generated authentication value to the provider system with the identifier of the mobile device. The provider system associates and stores the received identifier with the reference authentication value into the database. The operating phase proceeds as in the preceding embodiment.

According to a further embodiment, the descriptor may be transmitted by the provider system to the mobile device with the provider authentication value at the operating phase instead at the initialization phase with the reference authentication value produced by the provider system.

As in the case A, the provider authentication value can take several forms:
A random including for example an alpha-numeric characters or binary string that is associated with the identifier of the mobile device. At operating phase, the mobile device receives, as provider authentication value, the random retrieved from the database of the provider system by using the identifier of the mobile device and compares the received random with the random previously stored at initialization phase. When a match is found, functionalities of the mobile device are disabled according to the descriptor.

A reference key pertaining to the pair formed by the provider system and the mobile device. The reference key can be a symmetric key generated during the initialization phase and stored on the provider system and on the mobile device. The reference key can be an asymmetric key pair. In a first case, the mobile device already comprises an asymmetric key pair and communicates the public key to the provider system. In a second case, the provider system communicates to the mobile device a public key generated or selected for said mobile device. The corresponding private key is stored by the provider system in reference to the identifier of the mobile device. The expression "encrypting with the reference key" should be understood as using the private key for the encryption. The expression "decrypting with the reference key" should be understood as using the public key for the decryption.

At the operating phase, the provider system, after having received the identification of the mobile device, retrieves the corresponding reference key. A cryptogram is generated with data encrypted by the reference key. This cryptogram plays the role of the provider authentication value. The mobile device receives the cryptogram and decrypts it with the reference key to obtain the decrypted data. In case that the data is the mobile identifier, the mobile device compares the decrypted identifier with its own identifier and when a match is found functionalities of the mobile device are disabled according to the descriptor.

According to an embodiment, the cryptogram may be formed by the identifier of the mobile device and additional data encrypted with the reference key. The additional data may include a time stamp, the descriptor, an identifier of the provider system, or a combination thereof. In general, any other data that can be determined by the mobile device after decryption of the received provider authentication value with the reference key may be included into the cryptogram. A mathematical function known by the mobile device may also be applied to one or more additional data by the provider system as in case A.

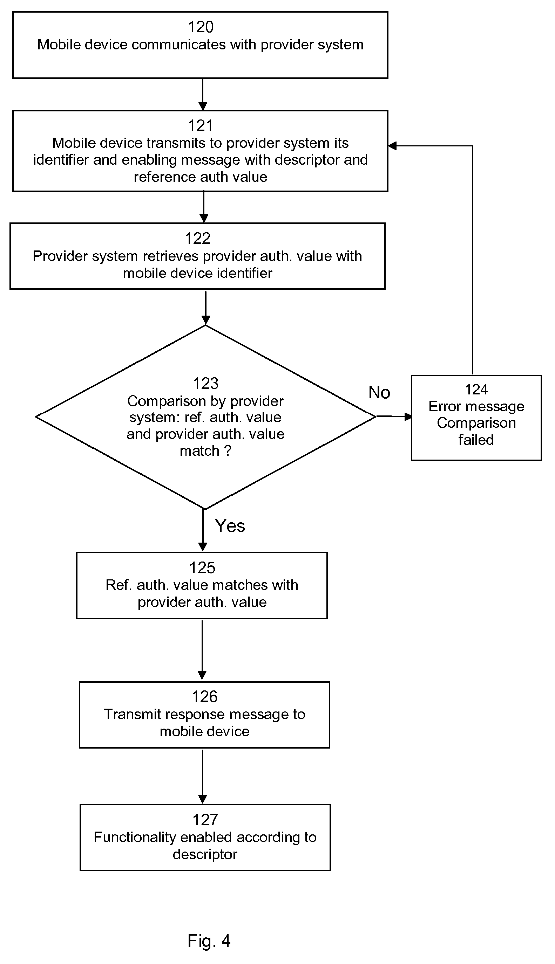

The disabled functionality on the mobile device may be enabled again once a communication is locally established between the provider system and the mobile device, figure 4, step 120. The mobile device may transmit its identifier and a request message for enabling the at least one previously disabled functionality on the mobile device to a terminal of the provider system, figure 4, step 121. The request message may comprise the reference authentication value and the descriptor retrieved from the memory of the mobile device. The provider system retrieves the provider authentication value from the database by using the identifier of the mobile device, figure 4, step 122. The received reference authentication value is then verified by the provider system by comparison with the provider authentication value, , figure 4, step 123. When the comparison of the authentication values gives a match, the provider system transmits to the mobile device a response message comprising a command for enabling the disabled functionalities according to the descriptor, figure 4, steps 125 to 127.

In a contrary case, if the verification fails by showing a difference between the compared reference authentication value retrieved from the memory of the mobile device and the received provider authentication value, an error may be signaled to the user of the mobile device, figure 4, step 124. The error may be signaled, for example, in form of an error message displayed on a screen associated with the mobile device, a sound signal, an optical signal or any other warning indicating that the at least one previously disabled functionality is not enabled. In this case, the functionality enabling process may be restarted by the terminal which transmits to the mobile device a new message comprising the enabling request associated with the identifier of the at least one functionality to enable.

As in the case A, the functionalities having been disabled by a terminal of the provider system in the mobile device may be enabled automatically after a predetermined time period or under predetermined operating conditions of the mobile device.

Although embodiments of the present disclosure have been described with reference to specific example embodiments, it will be evident that various modifications and changes may be made to these embodiments without departing from the broader scope of these embodiments. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived there from, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "disclosure" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A method to remotely manage by a provider system at least one functionality associated with a mobile device, comprising:
in an initialization phase:
producing a reference authentication value and storing the reference authentication value in a memory of the mobile device and the provider system,
in an operating phase:
establishing a communication between the provider system and the mobile device via a communication link,
receiving, by the mobile device from the provider system, a provider authentication value,
verifying, by the mobile device, the provider authentication value by using the reference authentication value stored in the memory of the mobile device during the initialization phase,
upon successful verification, disabling the at least one functionality of the mobile device according to a descriptor previously received in a message transmitted by the provider system.

2. The method according to claim 1 **characterized in that** the message comprising the descriptor of the at least one functionality to disable on the mobile device is received at the initialization phase.

3. The method according to claim 1 **characterized in that** the message comprising the descriptor of the at least one functionality to disable on the mobile device is received in at the operating phase.

4. The method according to claim 1 **characterized in that** the reference authentication value includes a constant value.

5. The method according to claim 1 **characterized in that** the reference authentication value includes a public encryption key to be used by a RSA type encryption algorithm.

6. The method according to claim 1 **characterized in that** the message comprises, in addition to the descriptor of the at least one functionality to disable, an identifier of the provider system, the provider authentication value comprising data encrypted with the reference authentication value including a public encryption key to be used by a RSA type encryption algorithm, the data comprising one of a timestamp, the identifier of the provider system or the descriptor of the at least one functionality to disable.

7. The method according to claim 1 **characterized in that** the communication link comprises a local bidirectional wireless communication link including one of a NFC (Near Field Communication) link, a Bluetooth type link or a WiFi (Wireless Fidelity) type link.

8. The method according to claim 1 **characterized in that** it further comprises:
in the initialization phase:
transmitting by the mobile device a unique identifier specific to the mobile device to the provider system, the reference authentication value being associated with the unique identifier specific to the mobile device,
receiving the message comprising the descriptor of the at least one functionality to disable,
in the operating phase:
transmitting by the mobile device, the unique identifier specific to the mobile device to the provider system,
receiving a provider authentication value retrieved by the provider system by the using the unique identifier specific to the mobile device,
verifying, by the mobile device, the provider authentication value by using the reference authentication value stored in the memory of the mobile device during the initialization phase,
upon successful verification, disabling the at least one functionality of the mobile device according to the descriptor received in the message at the initialization phase.

9. The method according to claim 8 **characterized in that** the reference authentication value includes a random value associated with the unique identifier specific to the mobile device, the mobile device receiving the random value retrieved by the provider system by using the unique identifier specific to the mobile device as provider authentication value for comparison with the random previously stored at initialization phase, the comparison giving a match, the at least one functionality of the mobile device being disabled according to the descriptor.

10. The method according to claim 8 **characterized in that** the reference authentication value includes a cryptogram formed by the unique identifier specific to the mobile device encrypted with a public key corresponding to the reference authentication value, the mobile device receiving the provider authentication value for decryption with the public key to obtain a decrypted identifier for comparison of the decrypted identifier with the unique identifier specific to the mobile device identifier, the comparison giving a match, the at least one functionality of the mobile device being disabled according to the descriptor.

11. The method **characterized in that** the functionalities having been disabled by the provider system according to the method of claim 1 in a mobile device are enabled automatically after a predetermined time period, the descriptor comprising in addition to the identifier of the at least one functionality to disable, an additional parameter configured to set a time period after which the at least one disabled functionality is enabled again.

12. The method **characterized in that** the functionalities having been disabled in the mobile device by the provider system according to the method of claim 8 are enabled by:
establishing a communication between the provider system and the mobile device via the communication link,
receiving by the provider system the unique identifier specific to the mobile device and an enabling message comprising the descriptor and the reference authentication value,
retrieving, by the provider system, the provider authentication value by using the unique identifier specific to the mobile device,
comparing, by the provider system, the received reference authentication value and the provider authentication value,
transmitting by the provider system a response message to the mobile device when the comparison gives a match, the at least one functionality being enabled according to the descriptor upon reception of the response message by the mobile device.
